# EUROPEAN PATENT SPECIFICATION

(11) **EP 2 665 326 B1**
(45) Date of publication and mention of the grant of the patent: **13.12.2017**
(21) Application number: 12168030.0
(22) Date of filing: 15.05.2012
(51) Int. Cl.: H04W 76/02

(54) **APPARATUS AND METHOD THEREOF FOR SETTING UP DEVICE-TO-DEVICE COMMUNICATION**
VORRICHTUNG UND VERFAHREN ZUM EINRICHTEN EINER VORRICHTUNG-ZU-VORRICHTUNG-KOMMUNIKATION
APPAREIL ET PROCÉDÉ PERMETTANT D'ÉTABLIR UNE COMMUNICATION DE DISPOSITIF À DISPOSITIF

(43) Date of publication of application: 20.11.2013
(73) Proprietor: Telefonaktiebolaget LM Ericsson (publ), 164 83 Stockholm (SE)
(72) Inventor: Hagerman, Bo, 135 52 Tyresö (SE); Lindoff, Bengt, 237 35 Bjärred (SE)
(74) Representative: Ericsson

(56) References cited:
- WO-A1-2012/114161
- US-A1- 2005 135 305
- US-A1- 2010 093 364
- US-A1- 2010 144 357
- US-A1- 2010 165 882
- US-A1- 2011 244 899
- US-A1- 2011 312 331

## Description

### TECHNICAL FIELD

The present disclosure relates to a scheduling apparatus for a cellular radio communication system.

### BACKGROUND

Device-to-Device (D2D) communication is about direct communication between devices. Sometimes a radio access network with access nodes is present and the devices operate within this radio network, but in some scenarios the communication devices itself constitute the radio access network.

There are several basic (potential) motivations for introducing the possibility for D2D communication.

Although the overall communication service can be provided by means of conventional device-to-access-point communication it can sometimes be provided in a better way with direct D2D communication. It could e.g. be so that the communication between two devices could be achieved at higher rate, with shorter latencies, or using less network resources (less capacity of an access node) if the communication is done directly between the devices than via network nodes (access nodes). The later can be seen as an offloading of the network.

A second reason for direct D2D communication is if the service to be provided cannot be supported (within given requirement boundaries) unless direct D2D communication is applied.

A third reason for supporting direct D2D communication is to ensure communication availability even if the network infrastructure for one reason or another is not available. This reason for supporting direct D2D communication is often mentioned e.g. in relation to National Security and Public Safety (NSPS) services but also for traffic safety applications. More generally, one can say D2D communication is used in this scenario to increased robustness and reliability.

Also, sometimes information is only valid or of interest in a local area, in which case it can make sense to rely on D2D communication.

Network-assistance can help in setting up a D2D service, i.e. assist in service and peer discovery and also in establishing security of the D2D link. Furthermore, the interference environment is under control for the network, which enables usage of licensed operator's spectrum (since the communication is under operator's control) whereby there is higher reliability than in unlicensed spectrum. The network can also provide synchronization and can assist in Radio Resource Management (RRM). An application of network assisted D2D is network offloading, where user plane data is exchanged directly between nearby terminals without been sent via a base station in order to reduce the load on the network nodes.

Prior to setting up a D2D communication between two devices, say D1 and D2, the network node does not know whether D1 and D2 is in proximity to each other, so that D2D communication is possible. A typical approach is to allocate a beacon signal to D1 and then require D2 to listen for the beacon and report detection of the beacon signal. There is a risk for interference with other units network communication or D2D communication during beacon signalling, and it can be a capacity waste to allocate, say orthogonal (such that other communication is not interfered) resources for beacon signalling if it turns out that the devices are too far from each other.

US 2010/0279627 discloses an apparatus and a method of switching between a D2D mode and a cellular mode in response to a command from a controller. Upon receiving a control command, both user equipments (UEs) set up for D2D mode communication, switching from cellular mode to D2D mode for direct communication with each other.

US 2011/0244899 discloses determining whether a wireless communication terminal should use a direct communication mode or communication via a cellular network when communicating with another terminal. A control server determines the mode based on location information and interference estimates.

US 2005/0135305 discloses techniques for initiating a direct wireless link between two wireless devices. The proximity between two devices is determined based on to which access point they are associated. If it is known that two access points are e.g. in the same room or in adjacent rooms, a direct link can be set up.

### SUMMARY

It is an objective of the present disclosure to alleviate a problem of the prior art associated with setting up D2D communication within a cellular communication system.

The invention is defined by a scheduling apparatus according to independent claim 1, a method according to independent claim 10, and a computer program product according to claim 15. Preferred embodiments are defined by claims 2-9 and 11-14.

According to an aspect of the present disclosure, there is provided a scheduling apparatus for a cellular radio communication system. The apparatus comprises a processor. The processor is configured for obtaining topographical information concerning a geographical area covered by the communication system, from a database comprising the topographical information. The processor is also configured for obtaining information about a geographical position held by a first wireless communication terminal and a geographical position held by a second wireless communication terminal of the communication system within said area. The processor is also configured for determining, based on the obtained topographical information and on the obtained geographical positions, whether direct wireless communication should be set up between the first wireless communication terminal and the second wireless communication terminal. The processor is also configured for allocating frequency and/or time resources for the direct communication between the terminals if it has been determined that direct wireless communication should be set up. The processor of the scheduling apparatus is associated with a transmitter configured for wirelessly sending a message comprising information about the allocated frequency and/or time resources to at least one of the first terminal and the second terminal. The processor is configured for preparing and supplying said message to said transmitter.

According to another aspect of the present disclosure, there is provided a method of a scheduling apparatus for a cellular radio communication system. The method comprises obtaining topographical information concerning a geographical area covered by the communication system, from a database comprising the topographical information. The method also comprises obtaining information about a geographical position held by a first wireless communication terminal and a geographical position held by a second wireless communication terminal of the communication system within said area. The method also comprises determining, based on the obtained topographical information and on the obtained geographical positions, whether direct wireless communication should be set up between the first wireless communication terminal and the second wireless communication terminal. The method also comprises allocating frequency and/or time resources for the direct communication between the terminals if it has been determined that direct wireless communication should be set up. The method also comprises sending a message comprising information about the allocated frequency and/or time resources to at least one of the first terminal and the second terminal.

An embodiment of the method of the present disclosure may e.g. be performed by an embodiment of the scheduling apparatus of the present disclosure.

According to another aspect of the present disclosure, there is provided a computer program product comprising computer-executable components for causing a scheduling apparatus to perform an embodiment of the method of the present disclosure, when the computer-executable components are run on a processor associated with the scheduling apparatus.

It is an advantage of the present disclosure that topographical information is used in combination with position information for the terminals when determining whether to set up direct wireless communication (D2D) between the two terminals. With the help of the topographical information, it may be possible to determine e.g. whether there are any topographical obstacles between the two terminals, such as walls, buildings, hills or the like, which may hinder direct communication between to two terminals or require direct communication to be conducted at such a high power level that it would likely interfere with other wireless communication. Similarly, with the help of the topographical information it may be possible to determine e.g. whether there are any topographical obstacles surrounding the terminals, reducing the risk of direct communication interfering with other wireless communication, e.g. if the two terminals are both indoors in the same room or building. Thus, unnecessary sending of beacon signals for setting up D2D communication can be avoided if it is first determined based on topographical information and position information whether D2D communication is feasible. Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

The invention is now described, by way of example, with reference to the accompanying drawings, in which:
Fig 1 is a schematic box diagram of an embodiment of a communication system of the present disclosure.
Fig 2 is a schematic box diagram of an embodiment of a scheduling apparatus of the present disclosure.
Fig 3 is a schematic box diagram of an embodiment of a storage unit associated with a scheduling apparatus of the present disclosure.
Fig 4 is a schematic box diagram of an embodiment of a radio base station (RBS) of the present disclosure.
Fig 5 is a schematic box diagram of an embodiment of a wireless communication terminal of the present disclosure.
Fig 6 is a schematic flow chart of an embodiment of a method of a scheduling apparatus of the present disclosure.
Fig 7 is a schematic flow chart of another embodiment of a method of a scheduling apparatus of the present disclosure.
Fig 8 is a schematic illustration of a computer program product of the present disclosure.
Fig 9a is a schematic box diagram illustrating an example of a use of an embodiment of the present disclosure.
Fig 9b schematically illustrates allocation of time slots for the example of Fig 9a.
Fig 10 is a schematic box diagram illustrating another example of a use of an embodiment of the present disclosure.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

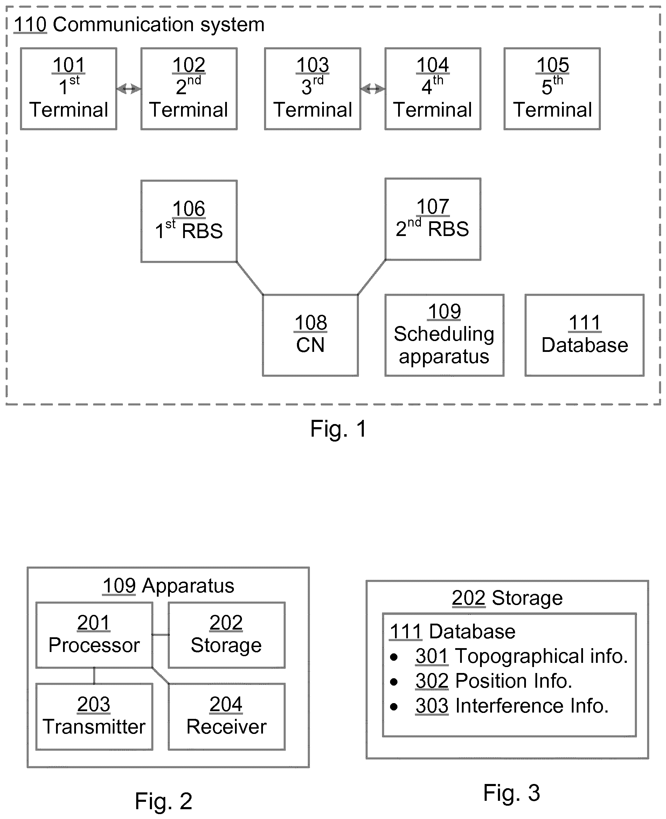

Figure 1 schematically illustrates a wireless communication system 110 in which an embodiment of the present disclosure can be beneficially used. The system 110 comprises a core network (CN) 108 associated with a radio access network (RAN) comprising a plurality of radio base stations (RBSs), here a first RBS 106 and a second RBS 107, via which a plurality of wireless communication terminals can connect to the CN 108 over a radio interface. In the embodiment of figure 1, five terminals are depicted, a first terminal 101, a second terminal 102, a third terminal 103, a fourth terminal 104 and a fifth terminal 105. Depending on the communication standard used by the system 110, other types of network nodes than the RBSs can be comprised in the RAN, e.g. a radio network control (RNC) node or a positioning node. The system 110 is a cellular radio communication system configured in accordance with any cellular radio communication standard, such as Global System for Mobile Communications (GSM), Universal Mobile Telecommunication System (UMTS), Long Term Evolution (LTE), Wideband Code Division Multiple Access (WCDMA), Ultra Mobile Broadband (UMB) and/or High-Speed Packet Access (HSPA). The system 110 may be a time division duplex (TDD) system or a frequency division duplex (FDD) system, as regards the uplink (UL) and downlink (DL) communication between a terminal 101-105 and its associated RBS 106 or 107. Consequently, the first and second RBS 106 and 107 as well as the terminals 101-105 are configured in accordance with any such communication standards which the system 110 is configured in accordance with. Any of the RBSs may e.g. be a Node B (NB) of a WCDMA/HSPA standard, or an evolved Node B (eNB) of an LTE standard. Any of the terminals 101-105 may e.g. be a mobile terminal such as a mobile phone, modem or a portable computer or other wireless device, or a stationary terminal such as a household appliance (fridge, freezer or the like) or an energy management gateway. The system 110 comprises a scheduling apparatus 109 configured for scheduling direct D2D communication between any of the terminals 101-105 of the system 110, as discussed herein. The scheduling apparatus may be a separate node of the system 110 or it may be integrated in a node of the system 110, such as in an RBS 106 and/or 107 or other RAN node, or in a node of the CN 108. The apparatus 109 is further discussed below in relation to figure 2. The communication system 110 also comprises a database 111 holding topographical information about a geographical area covered by the system 110, i.e. an area within which a terminal can wirelessly connect to the system 110. The database 111 is comprised in, or otherwise associated with, the scheduling apparatus 109. Thus, the database 111 may be separate from the scheduling apparatus 109 or integrated therein. The scheduling apparatus 109 is configured for determining, based on position information about the respective positions of at least some of the terminals 101-105 and on topographical information from the database 111, whether to set up direct D2D communication between the terminals, e.g. between the first terminal 101 and the second terminal 102 (as indicated by the double-headed arrow there between in figure 1) and/or between the third terminal 103 and the fourth terminal 104 (as indicated by the double-headed arrow there between in figure 1). Conveniently, any direct communication (D2D) between two terminals is TDD communication, regardless of whether the communication standard of the system 110 is TDD or FDD for communication between terminals and their associated RBSs. The D2D communication may conveniently be scheduled on the UL frequency (if the system is FDD for terminal-RBS communication), allowing the RBS 106 and/or 107 to monitor and detect any interference caused by the D2D communication. This implies that the terminals involved in D2D communication should be able to receive data also on the UL frequency (not only on the DL frequency). This also implies that there is a risk that the D2D communication (e.g. between the first terminal 101 and the second terminal 102) may interfere with UL transmissions from other terminals (e.g. the fifth terminal 105) of the system to its associated RBS, or with D2D communication conducted on the UL frequency between other terminals of the system (e.g. between the third terminal 103 an the fourth terminal 104). The scheduling apparatus 109 is configured for allocating frequency/time (f/t) resources to any D2D communication between the terminals 101-105. The apparatus 109 may allocate a first set of f/t resources to D2D communication between the first terminal 101 and the second terminal 102. If D2D communication is then also to be set up between the third terminal 103 and the fourth terminal 104, the apparatus 109 may decide, based on the topographical information and/or on the position information whether to allocate the same (or overlapping) f/t resources as the first set of resources also to the D2D between the third and fourth terminals, or to allocate a second set of f/t resources which is completely different from the first set in order to avoid interference between the different D2D communications. It may be convenient that both terminals 101 and 102, between which D2D communication is considered, are connected to the same RBS 106 or 107, especially if the scheduling unit 109 is integrated in the RBS, but it is also possible to use embodiments of the present disclosure in situations where the two terminals are connected via different RBSs.

Figure 2 schematically illustrates an embodiment of a scheduling apparatus 109 of the present disclosure. The apparatus 109 comprises or is otherwise associated with a processor 201 such that the processor 201 can be used by the apparatus 109. The processor 201 may be dedicated to the apparatus 109, or the processor 201 may be associated with and used also by other devices/functionalities or the like which are not part of the apparatus 109.

The processor 201 may comprise one or more processing units in the form of microprocessor(s) configured for executing appropriate software stored in associated memory 202 for procuring required functionality. However, other suitable devices with computing capabilities could be used, e.g. an application specific integrated circuit (ASIC), a field programmable gate array (FPGA), a complex programmable logic device (CPLD), etc. The apparatus 109 comprises, or is otherwise associated with, a storage unit or memory 202 configured for cooperation with the processor 201, e.g. such that a computer program (software) stored on the storage unit 202 can be run on the processor 201, such that the processor 201 can obtain information stored on the storage unit 202 and/or such that the processor 201 can store information on the storage unit 202. In some embodiments, the storage unit 202 contains the database 111. The apparatus 109 also comprises, or is otherwise associated with, a transmitter 203 and a receiver 204, which may be combined to form a transceiver or be present as distinct units within the apparatus 109. The transmitter 203 and the receiver 204 are configured to cooperate with the processor 201 to send and receive, respectively, signals to/from elements of the communication system 110. The transmitter 203 and the receiver 204 may be configured for wireless (radio) signalling or for wired signalling. If, e.g. the apparatus 109 is integrated with a radio base station (RBS), the transmitter 203 and the receiver 204 may be the regular transmitter and receiver of the RBS, just as the processor 201 and storage unit 202 may also be associated with other parts of the RBS and not be exclusively for the apparatus 109. The processor 201 is configured for obtaining topographical information concerning a geographical area covered by the communication system 110, from the database 111 comprising the topographical information. In some embodiments, the database 111 is comprised in the apparatus 109, e.g. held in the storage unit 202. In other embodiments, the database 111 is separate from the apparatus 109, and the processor 201 may obtain information from the database 111 via the receiver 204. The processor 201 is configured for obtaining information about a geographical position held by the first wireless communication terminal 101 and a geographical position held by the second wireless communication terminal 102 of the communication system 110. The position information may be obtained via the receiver 204 and may be e.g. global navigation satellite system (GNSS) information or positioning pilots information from the respective terminals and transmitted in accordance with the standard of the communication system, e.g. LTE positioning pilots. The processor 201 is configured for determining, based on the obtained topographical information and on the obtained geographical positions, whether direct wireless communication should be set up between the first wireless communication terminal and the second wireless communication terminal. By means of the position information, the processor 201 may be able to determine whether the terminals have positions close enough to each other to enable direct communication and/or prevent interference with other radio communication in the system 110 if direct, i.e. D2D, communication is set up. By means of the topographical information, in combination with the position information, the processor may be able to determine whether there are any topographical obstacles to direct communication (e.g. walls or buildings) between the terminals 101 and 102. The processor 201 is configured for allocating frequency and/or time resources (f/t resources) for the direct communication between the terminals if it has been determined that direct wireless communication should be set up. The f/t resources may be allocated in view of the obtained position information and/or topographical information in order to reduce the risk of interference with other radio signalling in the system 110. The f/t resources may be sent to one or both of the terminals 101 and 102 together with instruction for setting up the direct communication. The processor 201 may be controlled by a computer program stored in the storage unit 202 and run on the processor 201, such that the processor is configured to perform the actions of the processor discussed herein.

In some embodiments of the present disclosure, the processor 201 of the scheduling apparatus is associated with a transmitter 203 configured for wirelessly sending a message comprising information about the allocated frequency and/or time resources to at least one of the first terminal 101 and the second terminal 102, and the processor 201 is configured for preparing and supplying said message to said transmitter.

Figure 3 schematically illustrates an embodiment of a storage unit 202 of a scheduling apparatus 109. In this embodiment, the storage unit 202 comprises the database 111. The database holds the topographical information and cooperates with the processor of the scheduling apparatus 109 for allowing the processor 201 to obtain the topographical information from the database 111. The database may in some embodiments additionally be configured for holding interference information 303 and/or position information 302 stored in the database by the processor 201. It may be convenient to store interference information 303 together with associated position information 302 such that the combined position and interference information can give an indication of whether a position of a terminal (e.g. of the first and/or second terminals 101 and 102 in D2D communication) gives rise to interference with other radio communication (e.g. UL transmissions from the fifth terminal 105 to its associated RBS 106 or 107, or D2D communication between the third terminal 103 and the fourth terminal 104) in the system 110. The database 111 may thus be continuously or periodically, as needed, updated with interference information 303.

In some embodiments of the present disclosure, the scheduling apparatus 109 also comprises a storage unit 202 configured for holding the database 111 comprising the topographical information 301, and the processor 201 is configured for obtaining the topographical information from said storage unit.

In some embodiments of the present disclosure, the processor 201 of the scheduling apparatus is associated with a receiver 204 configured for wirelessly receiving interference information 303 from a radio communication terminal 101-105. The processor is then configured for obtaining the interference information from the receiver 204. The processor is then also configured for determining, based on the interference information, whether the frequency and/or time resources allocated should be changed. The processor is then also configured for changing the allocation of frequency and/or time resources for the direct communication between the terminals, if it has been determined that the resources should be changed. The processor is then also configured for preparing a message comprising information about the changed allocation of frequency and/or time resources. The processor is then also configured for supplying said message comprising information about the changed allocation to the transmitter for wireless transmission to at least one of the first terminal 101 and the second terminal 102. In some embodiments, the processor 201 is configured for updating the database 111 based on the obtained interference information 303, as further discussed below.

In some embodiments of the present disclosure, the processor 201 is configured for obtaining information 302 about a geographical position held by a third wireless communication terminal 103 and a geographical position held by a fourth wireless communication terminal 104 of the communication system 110 within said area covered by the system. The processor 201 is then also configured for determining, based on the obtained topographical information 301 and on the obtained geographical positions of the third and fourth terminals, whether direct wireless communication should be set up between the third wireless communication terminal 103 and the fourth wireless communication terminal 104. The processor 201 is then also configured for allocating frequency and/or time resources for the direct communication between the third and fourth terminals, if it has been determined that direct wireless communication should be set up there between, while the direct communication between the first and second terminals 101 and 102 is on-going. In some embodiments, the processor 201 is configured for deciding whether at least a subset of the frequency and/or time resources allocated for the direct communication between the first and second terminals should be allocated also for the direct communication between the third and fourth terminals, based on the obtained topographical information 301 and on the obtained geographical positions of the first, second, third and fourth communication terminals 101-104.

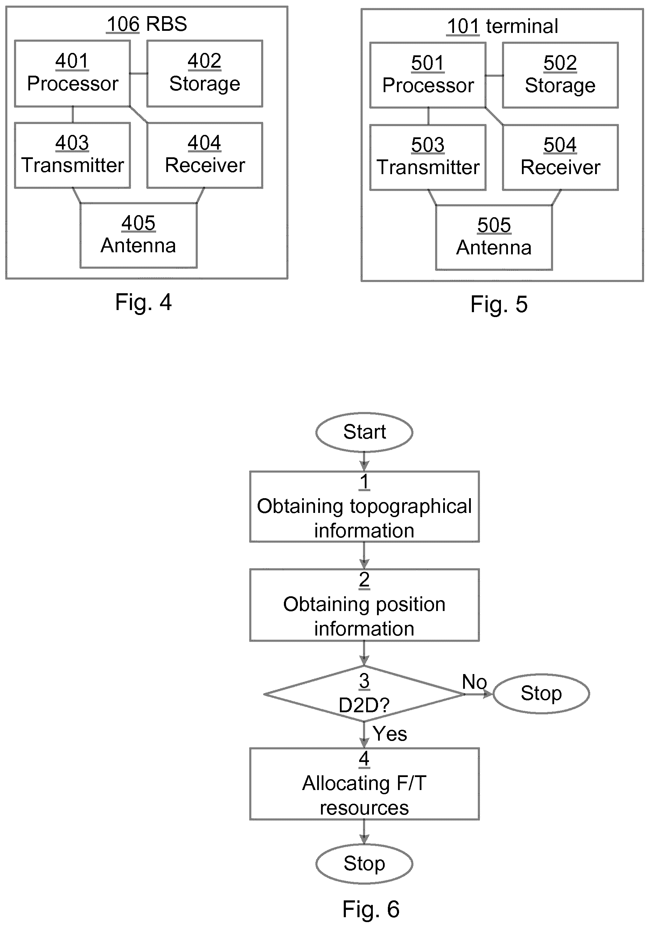

Figure 4 schematically illustrates an embodiment of an RBS 106 (also relevant for the RBS 107) of the present disclosure. The RBS 106 comprises a processor or central processing unit (CPU) 401. The processor 401 may comprise one or a plurality of processing units in the form of microprocessor(s). However, other suitable devices with computing capabilities could be used, e.g. an application specific integrated circuit (ASIC), a field programmable gate array (FPGA) or a complex programmable logic device (CPLD). The processor 401 is configured to run one or several computer program(s) or software stored in a storage unit or memory 402. The storage unit is regarded as a computer readable means and may e.g. be in the form of a Random Access Memory (RAM), a Flash memory or other solid state memory, or a hard disk. The processor 401 is also configured to store data in the storage unit 402, as needed. The RBS 106 also comprises a transmitter 403, a receiver 404 and an antenna 405, which may be combined to form a transceiver or be present as distinct units within the RBS 106. The transmitter 403 is configured to cooperate with the processor to transform data bits to be transmitted over a radio interface to a suitable radio signal in accordance with the radio access technology (RAT) used by the RAN via which the data bits are to be transmitted. The receiver 404 is configured to cooperate with the processor 401 to transform a received radio signal to transmitted data bits. The antenna 405 may comprise a single antenna or a plurality of antennas, e.g. for different frequencies and/or for MIMO (Multiple Input Multiple Output) communication. The antenna 405 is used by the transmitter 403 and the receiver 404 for transmitting and receiving, respectively, radio signals. If the scheduling apparatus 109 is integrated or otherwise associated with the RBS 106, the processor 401 of the RBS may also function as the processor 201 of the apparatus 109, the storage unit 402 of the RBS may also function as the storage unit 202 of the apparatus 109, the transmitter 403 of the RBS 106 may also function as the transmitter 203 of the apparatus 109, and/or the receiver 404 of the RBS may also function as the receiver 204 of the apparatus 109.

Figure 5 schematically illustrates an embodiment of a wireless communication terminal 101 (also relevant for any other terminal 102-105 discussed herein) of the present disclosure. The terminal 101 comprises a processor or central processing unit (CPU) 501. The processor 501 may comprise one or a plurality of processing units in the form of microprocessor(s). However, other suitable devices with computing capabilities could be used, e.g. an application specific integrated circuit (ASIC), a field programmable gate array (FPGA) or a complex programmable logic device (CPLD). The processor 501 is configured to run one or several computer program(s) or software stored in a storage unit or memory 502. The storage unit is regarded as a computer readable means and may e.g. be in the form of a Random Access Memory (RAM), a Flash memory or other solid state memory, or a hard disk. The processor 501 is also configured to store data in the storage unit 502, as needed. The terminal 101 also comprises a transmitter 503, a receiver 504 and an antenna 505, which may be combined to form a transceiver or be present as distinct units within the terminal 101. The transmitter 503 is configured to cooperate with the processor to transform data bits to be transmitted over a radio interface to a suitable radio signal in accordance with the RAT used by the RAN via which the data bits are to be transmitted. The receiver 504 is configured to cooperate with the processor 501 to transform a received radio signal to transmitted data bits. The antenna 505 may comprise a single antenna or a plurality of antennas, e.g. for different frequencies and/or for MIMO (Multiple Input Multiple Output) communication. The antenna 505 is used by the transmitter 503 and the receiver 504 for transmitting and receiving, respectively, radio signals.

Figure 6 is a flow chart illustrating an embodiment of a method of a scheduling apparatus 109, of the present disclosure. Topographical information 301 concerning a geographical area covered by the communication system 110 is obtained 1 from a database 111 comprising the topographical information. Position information 302 is obtained 2. The position information is about a geographical position held by a first wireless communication terminal 101 and a geographical position held by a second wireless communication terminal 102 of the communication system 110 within said area covered by the system 110. It should be noted that the obtaining step 2 may be performed before, after or simultaneously as the providing step 1. The position information 302 may be any type of position information relating to the geographical position of the first and second terminals 101 and 102, e.g. coordinates of the geographical position or one or a plurality of distances from the geographical position to one or a plurality of other (known) positions. Position information may e.g. originate from a global navigation satellite system (GNSS) functionality integrated in the terminals or from triangulation operations between a plurality of radio communication devices (e.g. terminals and/or RBSs at the earth surface) using for instance positioning pilots transmitted according to well known principles for the used cellular system (LTE, LTE position pilots, for instance). Thus, position information 302 of the terminals may e.g. comprise Global Positioning System (GPS) information or position information based on positioning pilots transmitted from an RBS for the terminals. In some embodiments, the obtaining 2 of position information 302 may comprise requesting the position information from the first and second terminals; and receiving the position information from said first and second terminals. If the first and/or second terminals, comprises a GPS, or other GNSS, function, the requesting may comprise a request for GPS coordinates of the geographical position currently held by terminal to be obtained by the terminal and to be sent back to the apparatus 109. This is an exemplary way of obtaining 2 the position information 302. Based on the obtained 1 topographical information 301 and on the obtained 2 geographical positions, it is determined 3 whether direct wireless communication should be set up between the first wireless communication terminal 101 and the second wireless communication terminal 102. With the help of the topographical information 301 in combination with the position information 302, it may be possible to determine e.g. whether there are any topographical obstacles between the two terminals 101 and 102, such as walls, buildings, hills or the like, which may hinder direct communication between to two terminals or require direct communication to be conducted at such a high power level that it would likely interfere with other wireless communication. Similarly, with the help of the topographical information it may be possible to determine e.g. whether there are any topographical obstacles surrounding the terminals, reducing the risk of direct communication interfering with other wireless communication, e.g. if the two terminals are both indoors in the same room or building. Thus, the positions of the terminals, as defined by the obtained 2 position information 302 can be correlated to the topographical information 301 available in the database 111. This may e.g. result in the conclusion that one or both of the terminals 101 and 102 are inside the same building (reducing the risk of interference with other terminals 103-105) or that there is a building between the terminals 101 and 102 (making it less convenient to use direct communication between the terminals). Frequency and/or time (f/t) resources for the direct communication between the terminals 101, 102 are allocated 4, if it has been determined 3 that direct wireless communication should be set up. As mentioned above, it may be convenient to allocate resources on the UL frequency (in case of FDD communication standard for communication between terminals and RBS 106) or on UL resources (in case of FDD communication standard for communication between terminals and RBS 106). However, in some embodiments, DL frequency or DL resources may additionally or alternatively be used for the D2D communication. If it has been determined 3 that D2D communication should not be set up, no f/t resources are allocated 4. In addition to f/t resources, the D2D communication may be allocated a maximum radio signal strength in order to reduce the risk of interference. The terminals 101 and 102 may then use the allocated 4 resources for D2D communication. If the allocated 4 resources are not enough for transmitting all the data one of the terminals want to send to the other terminal, the excess data may be sent via the RAN, e.g. via the RBS 106 or 107.

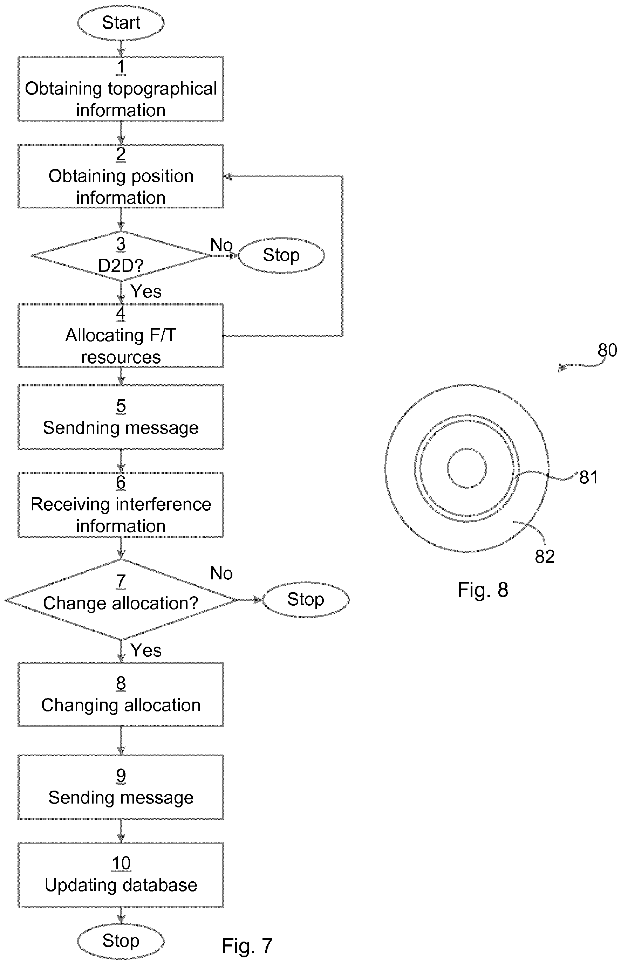

Figure 7 is a flow chart illustrating another embodiment of a method of a scheduling apparatus 109, of the present disclosure. The obtaining 1 of topographical information 301, the obtaining 2 of position information 302, the determining 3 and the allocating 4 are as discussed in relation to figure 6.

An arrow from the allocating of step 4 back to the position information obtaining of step 2 indicates that the method steps may in some embodiments be repeated for D2D communication between other terminal pairs, such as between the third terminal 103 and the fourth terminal 104. The third and fourth terminals may be connected to the same RBS 106 or 107 as the first terminal 101 and/or second terminal 102, or they may be connected to another RBS. Thus, the method may in some embodiments comprise obtaining 2 information 302 about a geographical position held by a third wireless communication terminal 103 and a geographical position held by a fourth wireless communication terminal 104 of the communication system 110 within said area covered by the system 110. The method may then comprise determining 3, based on the obtained 1 topographical information 301 and on the obtained 2 geographical positions of the third and fourth terminals, whether direct wireless communication should be set up between the third wireless communication terminal 103 and the fourth wireless communication terminal 104. The method may then comprise allocating 4 frequency and/or time resources for the direct communication between the third and fourth terminals, if it has been determined 3 that direct wireless communication should be set up there between, while the direct communication between the first and second terminals 101 and 102 is on-going. In some embodiments the allocating 4 may then comprise deciding whether at least a subset of the frequency and/or time resources allocated for the direct communication between the first and second terminals 101 and 102 should be allocated also for the direct communication between the third and fourth terminals 103 and 104, based on the obtained 1 topographical information 301 and on the obtained 2 geographical positions of the first, second, third and fourth communication terminals. The same or overlapping f/t resources may be allocated 4 to the D2D communication between the third and forth terminals if it is determined that they are remote enough from and/or that there are topographical obstacles between, the first and second terminals such that the risk of interference between the different D2D communications regarded as low.

In some embodiments, a message comprising information about the allocated 4 f/t resources is sent 5 to at least one of the first terminal 101 and the second terminal 102. It may be convenient to send 5 such a message in order to inform the terminal of the f/t resources allocated 4 for the D2D communication. A message may be sent 5 to one of the terminals 101 or 102 or to both of them. If a message is sent only to one of the terminals, that terminal may then inform the other terminal via D2D communication. In some embodiments, the method comprises receiving 6 interference information 303 from a radio communication terminal 101-105. The interference information 303 may e.g. comprise channel quality indicator (CQI), channel state information (CSI) and/or channel strength measurements. The interference information may be from the first or second terminals 101 or 102 regarding the D2D communication there between. Interference information indicating low or no interference then indicates that D2D communication with the allocated 4 t/f resources works well. Additionally or alternatively, the interference information may be from another terminal 103-105, indicating whether there is interference in communication with a RBS or in D2D communication with yet another terminal as a result of the D2D communication between the first and second terminals. Based on this interference information 303, it is determined whether the frequency and/or time resources allocated 4 for D2D communication between the first and second terminals should be changed, e.g. if there is too much interference in the D2D communication between the first and second terminals, or if the D2D communication between the first and second terminals interfere too much in other radio communications. If it has been determined 7 that the resources should be changed, the allocation of frequency and/or time resources for the direct communication between the terminals 101 and 102 is changed 8. A message is sent 9 to at least one of the first terminal 101 and the second terminal 102. The message comprises information about the changed 8 allocation of f/t resources. The terminals 101 and 102 can then use the new allocation. New interference information 303 may then be received and considered regarding the new allocation. The database 111 may in some embodiments be updated 10 based on the received 6 interference information 303 for future reference to see which combinations of terminal positions and f/t resources result in too much interference.

Figure 8 illustrates a computer program product 80 of the present disclosure. The computer program product 80 comprises a computer readable medium 82 comprising a computer program 81 in the form of computer-executable components 81. The computer program/computer-executable components 81 may be configured to cause a scheduling apparatus 109, e.g. as discussed above, to perform an embodiment of a method discussed herein. The computer program/computer-executable components may be run on the processor 201 of the apparatus 109 for causing the apparatus to perform the method. The computer program product 80 may e.g. be comprised in a storage unit or memory comprised in the apparatus 109 and associated with the processor 201. Alternatively, the computer program product 80 may be, or be part of, a separate, e.g. mobile, storage means, such as a computer readable disc, e.g. CD or DVD or hard disc/drive, or a solid state storage medium, e.g. a RAM or Flash memory.

### Example 1

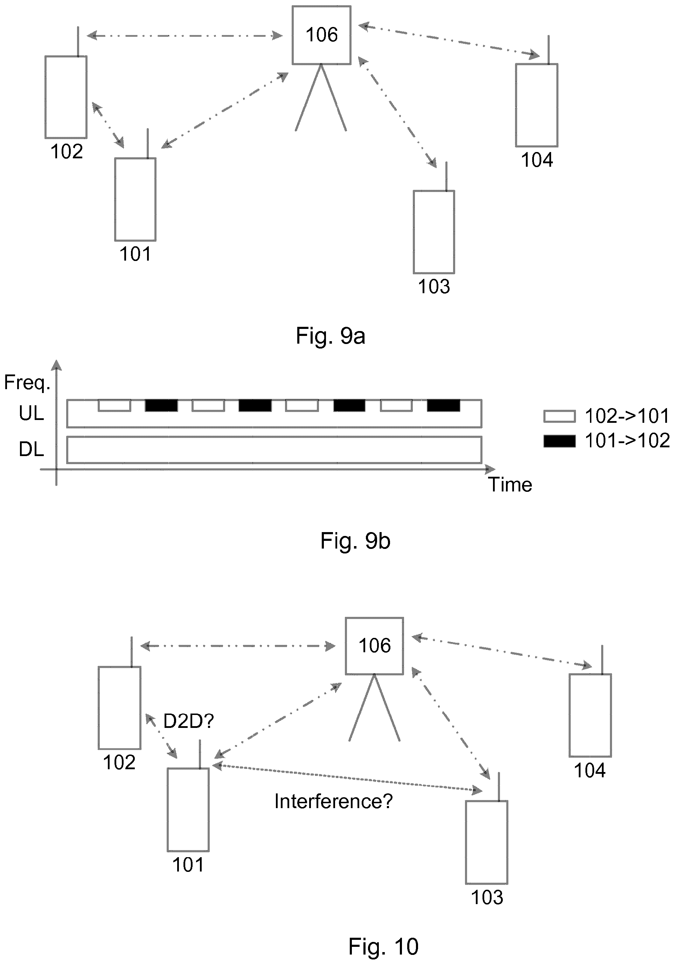

Figure 9a shows an example of network (NW) assisted D2D communication. Several devices 101-104 are connected to a network node or RBS 106. The communication in this case is based on FDD, i.e. the UL and DL communication between the devices/terminals and the network node 106 is separated in frequency. Furthermore, the network node 106 (or another unit in the network comprising a scheduling apparatus 109) is in control of allocating time/frequency resources to terminals for UL/DL communication as well as resources for potential D2D communication (which could be resource blocks or similar in case the cellular system is operating according to the 3GPP LTE standard). In the example, certain resources in the UL frequency band have been allocated 4 for D2D communication between the first terminal 101 and the second terminal 102 (see figure 9b where allocated resources in the UL frequency band are indicated for D2D communication from the second terminal 102 to the first terminal 101 (non-filled bars) and from the first terminal 101 to the second terminal 102 (filled bars)). Furthermore, the network node 106 could also control the transmit power in the D2D communication, in order to not interfere with the ordinary UL traffic (for instance between the third and fourth terminals 103 and 104 and the network node 106).

### Example 2

Figure 10 shows a principle sketch over an exemplary embodiment. The NW node 106 determines position information 302 for the first terminal 101 and the second terminal 102, aiming at setting up D2D communication. Together with a data base 111 over topographical information 301, the network node can determine whether the first terminal 101 and the second terminal 102 are in proximity to each other. Note that by using topographical information 301, the proximity is not purely based on distance, but also on whether the terminals are e.g. placed indoors and/or outdoors. Such information may give different answers to whether the terminals are close enough to each other. If NW node 106 determines that D2D is possible, the NW node instructs the terminals to initiate D2D communication. The NW node also, based on same information 301 and 302, and possible information of other terminal's 103 and 104 (the third terminal 103 and the fourth terminal 104) position, determine whether (A) the same f/t resources can be allocated 4 to D2D communication between the third terminal 103 and the fourth terminal 104, and/or (B) whether the first terminal 101 and the second terminal 102 D2D communication interfere with possible NW communication between the third terminal 103/the fourth terminal 104 and the NW node 106. If no interference risk, (A) the f/t resources can be reused for D2D communication or (B) reused for NW communication.

### Example 3

According to an embodiment of the present disclosure, there is provided a scheduling apparatus 109 for a cellular radio communication system 110. The apparatus comprises means 201 for obtaining 1 topographical information 301 concerning a geographical area covered by the communication system 110, from a database 111 comprising the topographical information. The apparatus also comprises means 201 for obtaining 2 information 302 about a geographical position held by a first wireless communication terminal 101 and a geographical position held by a second wireless communication terminal 102 of the communication system 110 within said area. The apparatus also comprises means 201 for determining 3, based on the obtained 1 topographical information 301 and on the obtained 2 geographical positions, whether direct wireless communication should be set up between the first wireless communication terminal 101 and the second wireless communication terminal 102. The apparatus also comprises means 201 for allocating 4 frequency and/or time resources for the direct communication between the terminals 101 and 102 if it has been determined 3 that direct wireless communication should be set up.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A scheduling apparatus (109) for a cellular radio communication system (110), the apparatus comprising a processor (201) configured for:
obtaining (1) topographical information (301) concerning a geographical area covered by the communication system (110), from a database (111) comprising the topographical information;
obtaining (2) information (302) about a geographical position held by a first wireless communication terminal (101) and a geographical position held by a second wireless communication terminal (102) of the communication system (110) within said area;
determining (3), based on the obtained (1) topographical information (301) and on the obtained (2) geographical positions, whether direct wireless communication should be set up between the first wireless communication terminal (101) and the second wireless communication terminal (102); and
allocating (4) frequency and/or time resources for the direct communication between the terminals (101,102) if it has been determined (3) that direct wireless communication should be set up;
wherein the processor (201) of the scheduling apparatus is associated with a transmitter (203) configured for wirelessly sending (5) a message comprising information about the allocated (4) frequency and/or time resources to at least one of the first terminal (101) and the second terminal (102), and wherein the processor (201) is configured for preparing and supplying said message to said transmitter, and
wherein said determining comprises determining whether there are any topographical obstacles between and/or surrounding the two terminals.

2. The scheduling apparatus of claim 1, wherein the scheduling apparatus (109) also comprises a storage unit (202) configured for holding the database (111) comprising the topographical information (301), and wherein the processor (201) is configured for obtaining (1) the topographical information from said storage unit.

3. The scheduling apparatus of any preceding claim, wherein the processor (201) of the scheduling apparatus is associated with a receiver (204) configured for wirelessly receiving (6) interference information (303) from a radio communication terminal (101-105), and wherein the processor is configured for:
obtaining the interference information from the receiver (204);
determining (7), based on the interference information, that the frequency and/or time resources allocated (4) should be changed;
changing (8) the allocation of frequency and/or time resources for the direct communication between the terminals;
preparing a message comprising information about the changed allocation of frequency and/or time resources; and
supplying said message comprising information about the changed allocation to the transmitter for wireless transmission (9) to at least one of the first terminal (101) and the second terminal (102).

4. The scheduling apparatus of claim 3, wherein the database (111) is configured for holding interference information (303), and wherein the processor (201) is configured for updating (10) the database (111) based on the obtained interference information (303).

5. The scheduling apparatus of any preceding claim, wherein the processor (201) is configured for:
obtaining (2) information (302) about a geographical position held by a third wireless communication terminal (103) and a geographical position held by a fourth wireless communication terminal (104) of the communication system (110) within said area;
determining (3), based on the obtained (1) topographical information (301) and on the obtained (2) geographical positions of the third and fourth terminals, that direct wireless communication should be set up between the third wireless communication terminal (103) and the fourth wireless communication terminal (104); and
allocating (4) frequency and/or time resources for the direct communication between the third and fourth terminals (103, 104).

6. The scheduling apparatus of claim 5, wherein the processor (201) is configured for:
deciding whether at least a subset of the frequency and/or time resources allocated (4) for the direct communication between the first and second terminals (101,102) should be allocated (4) also for the direct communication between the third and fourth terminals (103, 104), based on the obtained (1) topographical information (301) and on the obtained (2) geographical positions of the first, second, third and fourth communication terminals (101-104).

7. The scheduling apparatus of any preceding claim, wherein the first and second terminals (101, 102) are both connected to a first radio base station (106) of the communication system (110).

8. The scheduling apparatus of any preceding claim, wherein the apparatus (109) is comprised in a network node in the cellular radio communication system (110)..

9. The scheduling apparatus of claim 8, wherein the network node is a first radio base station, RBS, (106) of the communication system, to which RBS both the first and second terminals (101,102) are connected.

10. A method of a scheduling apparatus (109) for a cellular radio communication system (110), the method comprising:
obtaining (1) topographical information (301) concerning a geographical area covered by the communication system (110), from a database (111) comprising the topographical information (301);
obtaining (2) information (302) about a geographical position held by a first wireless communication terminal (101) and a geographical position held by a second wireless communication terminal (102) of the communication system (110) within said area;
determining (3), based on the obtained (1) topographical information (301) and on the obtained (2) geographical positions, whether direct wireless communication should be set up between the first wireless communication terminal (101) and the second wireless communication terminal (102), wherein said determining (3) comprises determining whether there are any topographical obstacles between and/or surrounding the two terminals;
allocating (4) frequency and/or time resources for the direct communication between the terminals (101,102) if it has been determined (3) that direct wireless communication should be set up; and
sending (5) a message comprising information about the allocated (4) frequency and/or time resources to at least one of the first terminal (101) and the second terminal (102).

11. The method of claim 10, comprising:
receiving (6) interference information (303) from a radio communication terminal (101-105);
determining (7), based on the interference information (303), that the frequency and/or time resources allocated (4) should be changed;
changing (8) the allocation of frequency and/or time resources for the direct communication between the terminals; and
sending (9) a message comprising information about changed allocation of frequency and/or time resources to at least one of the first terminal (101) and the second terminal (102).

12. The method of claim 11, wherein the database (111) is configured for holding interference information (303), the method comprising:
updating (10) the database (111) based on the received interference information (303).

13. The method of any claim 10-12, comprising:
obtaining (2) information (302) about a geographical position held by a third wireless communication terminal (103) and a geographical position held by a fourth wireless communication terminal (104) of the communication system (110) within said area;
determining (3), based on the obtained (1) topographical information (301) and on the obtained (2) geographical positions of the third and fourth terminals, that direct wireless communication should be set up between the third wireless communication terminal (103) and the fourth wireless communication terminal (104) and
allocating (4) frequency and/or time resources for the direct communication between the third and fourth terminals.

14. The method of claim 13, wherein the allocating (4) comprises:
deciding whether at least a subset of the frequency and/or time resources allocated for the direct communication between the first and second terminals (101,102) should be allocated also for the direct communication between the third and fourth terminals (103, 104), based on the obtained (1) topographical information (301) and on the obtained (2) geographical positions of the first, second, third and fourth communication terminals.

15. A computer program product (80) comprising computer-executable components (81) for causing a scheduling apparatus (109) to perform the method of any one of claims 10-14 when the computer-executable components are run on a processor (201) associated with the scheduling apparatus.

## Patentansprüche

1. Zeitplanungsvorrichtung (109) für ein Funkzellenkommunikationssystem (110), wobei die Vorrichtung einen Prozessor (201) umfasst, der konfiguriert ist zum:
Abrufen (1) von topografischen Informationen (301) in Bezug auf ein geografisches Gebiet, das vom Kommunikationssystem (110) versorgt wird, von einer Datenbank (111) mit topografischen Informationen;
Abrufen (2) von Informationen (302) über eine geografische Position, die von einem ersten drahtlosen Kommunikationsendgerät (101) innegehabt wird, und eine geografische Position, die von einem zweiten drahtlosen Kommunikationsendgerät (102) des Kommunikationssystems (110) innerhalb des Gebiets innegehabt wird;
Bestimmen (3) basierend auf den abgerufenen (1) topografischen Informationen (301) und auf den abgerufenen (2) geografischen Positionen, ob direkte drahtlose Kommunikation zwischen dem ersten drahtlosen Kommunikationsendgerät (101) und dem zweiten drahtlosen Kommunikationsendgerät (102) aufgebaut werden sollte; und
Zuordnen (4) von Frequenz- und Zeitressourcen für die direkte Kommunikation zwischen den Endgeräten (101, 102), wenn bestimmt wurde (3), dass direkte drahtlose Kommunikation aufgebaut werden sollte;
wobei der Prozessor (201) der Zeitplanungsvorrichtung mit einem Sender (203) assoziiert ist, der zum drahtlosen Senden (5) einer Nachricht mit Informationen über die zugeordneten (4) Frequenz- und/oder Zeitressourcen an mindestens eines von dem ersten Endgerät (101) und dem zweiten Endgerät (102) konfiguriert ist, und wobei der Prozessor (201) zum Erstellen und Bereitstellen der Nachricht für den Sender konfiguriert ist, und
wobei das Bestimmen ein Bestimmen umfasst, ob es topografische Hindernisse zwischen den und/oder um die beiden Endgeräte(n) gibt.

2. Zeitplanungsvorrichtung nach Anspruch 1, wobei die Zeitplanungsvorrichtung (109) außerdem eine Speichereinheit (202) umfasst, die so konfiguriert ist, dass sie eine Datenbank (111) mit den topografischen Informationen (301) enthält, und wobei der Prozessor (201) zum Abrufen (1) der topografischen Informationen von der Speichereinheit konfiguriert ist.

3. Zeitplanungsvorrichtung nach einem der vorhergehenden Ansprüche, wobei der Prozessor (201) der Zeitplanungsvorrichtung mit einem Empfänger (204) assoziiert ist, der zum drahtlosen Empfangen (6) von Interferenzinformationen (303) von einem Funkkommunikationsendgerät (101 - 105) konfiguriert ist, und wobei der Prozessor konfiguriert ist zum:
Abrufen der Interferenzinformationen vom Empfänger (204);
Bestimmen (7) basierend auf den Interferenzinformationen, dass die zugeordneten (4) Frequenz- und/oder Zeitressourcen geändert werden sollten;
Ändern (8) der Zuordnung von Frequenz- und/oder Zeitressourcen für die direkte Kommunikation zwischen den Endgeräten;
Erstellen einer Nachricht mit Informationen über die geänderte Zuordnung von Frequenz- und/oder Zeitressourcen; und
Bereitstellen der Nachricht mit Informationen über die geänderte Zuordnung für den Sender zur drahtlosen Übertragung (9) an mindestens eines von dem ersten Endgerät (101) und dem zweiten Endgerät (102).

4. Zeitplanungsvorrichtung nach Anspruch 3, wobei die Datenbank (111) zum Speichern von Interferenzinformationen (303) konfiguriert ist, und wobei der Prozessor (201) zum Aktualisieren (10) der Datenbank (111) basierend auf den abgerufenen Interferenzinformationen (303) konfiguriert ist.

5. Zeitplanungsvorrichtung nach einem der vorhergehenden Ansprüche, wobei der Prozessor (201) konfiguriert ist zum:
Abrufen (2) von Informationen (302) über eine geografische Position, die von einem dritten drahtlosen Kommunikationsendgerät (103) innegehabt wird, und eine geografische Position, die von einem vierten drahtlosen Kommunikationsendgerät (104) des Kommunikationssystems (110) innerhalb des Gebiets innegehabt wird;
Bestimmen (3) basierend auf den abgerufenen (1) topografischen Informationen (301) und auf den abgerufenen (2) geografische Positionen der dritten und vierten Endgeräte, dass direkte drahtlose Kommunikation zwischen dem dritten drahtlosen Kommunikationsendgerät (103) und dem vierten drahtlosen Kommunikationsendgerät (104) aufgebaut werden sollte; und
Zuordnen (4) von Frequenz- und/oder Zeitressourcen für die direkte Kommunikation zwischen den dritten und vierten Endgeräten (103, 104).

6. Zeitplanungsvorrichtung nach Anspruch 5, wobei der Prozessor (201) konfiguriert ist zum:
Entscheiden basierend auf den abgerufenen (1) topografischen Informationen (301) und den abgerufenen (2) geografischen Positionen der ersten, zweiten, dritten und vierten Endgeräte (101 - 104), ob wenigstens ein Teilsatz der für die direkte Kommunikation zwischen den ersten und zweiten Endgeräten (101, 102) zugeordneten (4) Frequenz- und/oder Zeitressourcen auch für die direkte Kommunikation zwischen den dritten und vierten Endgeräten (103, 104) zugeordnet werden sollte (4).

7. Zeitplanungsvorrichtung nach einem der vorhergehenden Ansprüche, wobei die ersten und zweiten Endgeräte (101, 102) beide mit einer ersten Funkbasisstation (106) des Kommunikationssystems (110) verbunden sind.

8. Zeitplanungsvorrichtung nach einem der vorhergehenden Ansprüche, wobei die Vorrichtung (109) in einem Netzwerknoten im Funkzellenkommunikationssystem (110) enthalten ist.

9. Zeitplanungsvorrichtung nach Anspruch 8, wobei der Netzwerkknoten eine erste Funkbasisstation, RBS, (106) des Kommunikationssystems ist, mit welcher RBS beide der ersten und zweiten Endgeräte (101, 102) verbunden sind.

10. Verfahren einer Zeitplanungsvorrichtung (109) für ein Funkzellenkommunikationssystem (110), wobei das Verfahren umfasst:
Abrufen (1) von topografischen Informationen (301) in Bezug auf ein geografisches Gebiet, das vom Kommunikationssystem (110) versorgt wird, von einer Datenbank (111) mit den topografischen Informationen (301) ;
Abrufen (2) von Informationen (302) über eine geografische Position, die von einem ersten drahtlosen Kommunikationsendgerät (101) innegehabt wird, und eine geografische Position, die von einem zweiten drahtlosen Kommunikationsendgerät (102) des Kommunikationssystems (110) innerhalb des Gebiets innegehabt wird;
Bestimmen (3) basierend auf den abgerufenen (1) topografischen Informationen (301) und auf den abgerufenen (2) geografischen Positionen, ob direkte drahtlose Kommunikation zwischen dem ersten drahtlosen Kommunikationsendgerät (101) und dem zweiten drahtlosen Kommunikationsendgerät (102) aufgebaut werden sollte, wobei das Bestimmen (3) ein Bestimmen umfasst, ob es topografische Hindernisse zwischen den und/oder um die beiden Endgeräte gibt;
Zuordnen (4) von Frequenz- und Zeitressourcen für die direkte Kommunikation zwischen den Endgeräten (101, 102), wenn bestimmt wurde (3), dass direkte drahtlose Kommunikation aufgebaut werden sollte; und
Senden (5) einer Nachricht mit Informationen über die zugeordneten (4) Frequenz- und/oder Zeitressourcen an mindestens eines von dem ersten Endgerät (101) und dem zweiten Endgerät (102).

11. Verfahren nach Anspruch 10, umfassend:
Empfangen (6) von Interferenzinformationen (303) von einem Funkkommunikationsendgerät (101 - 105);
Bestimmen (7) basierend auf den Interferenzinformationen (303), dass die zugeordneten (4) Frequenz- und/oder Zeitressourcen geändert werden sollten;
Ändern (8) der Zuordnung von Frequenz- und/oder Zeitressourcen für die direkte Kommunikation zwischen den Endgeräten; und
Senden (9) einer Nachricht mit Informationen über die geänderte Zuordnung von Frequenz- und/oder Zeitressourcen an mindestens eines von dem ersten Endgerät (101) und dem zweiten Endgerät (102).

12. Verfahren nach Anspruch 11, wobei die Datenbank (111) zum Speichern von Interferenzinformationen (303) konfiguriert ist, und das Verfahren umfasst:
Aktualisieren (10) der Datenbank (111) basierend auf den empfangenen Interferenzinformationen (303).

13. Verfahren nach einem der Ansprüche 10 bis 12, umfassend:
Abrufen (2) von Informationen (302) über eine geografische Position, die von einem dritten drahtlosen Kommunikationsendgerät (103) innegehabt wird, und eine geografische Position, die von einem vierten drahtlosen Kommunikationsendgerät (104) des Kommunikationssystems (110) innerhalb des Gebiets innegehabt wird;
Bestimmen (3) basierend auf den abgerufenen (1) topografischen Informationen (301) und auf den abgerufenen (2) geografischen Positionen der dritten und vierten Endgeräte, dass direkte drahtlose Kommunikation zwischen dem dritten drahtlosen Kommunikationsendgerät (103) und dem vierten drahtlosen Kommunikationsendgerät (104) aufgebaut werden sollte; und
Zuordnen (4) von Frequenz- und/oder Zeitressourcen für die direkte Kommunikation zwischen den dritten und vierten Endgeräten.

14. Verfahren nach Anspruch 13, wobei das Zuordnen (4) umfasst:
Entscheiden basierend auf den abgerufenen (1) topografischen Informationen (301) und den abgerufenen (2) geografischen Positionen der ersten, zweiten, dritten und vierten Endgeräte, ob wenigstens ein Teilsatz der für die direkte Kommunikation zwischen den ersten und zweiten Endgeräten (101, 102) zugeordneten Frequenz- und/oder Zeitressourcen auch für die direkte Kommunikation zwischen den dritten und vierten Endgeräten (103, 104) zugeordnet werden sollte.

15. Computerprogrammprodukt (80), umfassend computerausführbare Komponenten (81), um eine Zeitplanungsvorrichtung (109) zu veranlassen, das Verfahren nach einem der Ansprüche 10 bis 14 durchzuführen, wenn die computerausführbaren Komponenten auf einem Prozessor (201) ausgeführt werden, der mit der Zeitplanungsvorrichtung assoziiert ist.

## Revendications

1. Appareil de programmation (109) pour un système de radiocommunication cellulaire (110), l'appareil comprenant un processeur (201) configuré pour :
l'obtention (1) d'informations topographiques (301) concernant une zone géographique couverte par le système de communication (110), à partir d'une base de données (111) comprenant les informations topographiques ;
l'obtention (2) d'informations (302) relatives à une position géographique occupée par un premier terminal de communication sans fil (101) et une position géographique occupée par un deuxième terminal de communication sans fil (102) du système de communication (110) à l'intérieur de ladite zone ;
la détermination (3), sur la base des informations topographiques (301) obtenues (1) et des informations géographiques obtenues (2), si une communication sans fil directe doit être établie entre le premier terminal de communication sans fil (101) et le deuxième terminal de communication sans fil (102) ; et
l'allocation (4) de ressources de fréquence et/ou de temps pour la communication directe entre les terminaux (101, 102) s'il est déterminé (3) qu'une communication sans fil directe doit être établie ;
dans lequel le processeur (201) de l'appareil de programmation est associé à un émetteur (203) configuré pour l'envoi sans fil (5) d'un message comprenant des informations relatives aux ressources de fréquence et/ou de temps allouées (4) à destination d'au moins l'un du premier terminal (101) et du deuxième terminal (102), et dans lequel le processeur (201) est configuré pour la préparation et la fourniture dudit message au dit émetteur, et
dans lequel ladite détermination comprend la détermination s'il existe des obstacles topographiques entre les deux terminaux et/ou aux alentours de ceux-ci.

2. Appareil de programmation selon la revendication 1, dans lequel l'appareil de programmation (109) comprend également une unité de mémorisation (202) configurée pour contenir la base de données (111) comprenant les informations topographiques (301), et dans lequel le processeur (201) est configuré pour l'obtention (1) des informations topographiques à partir de ladite unité de mémorisation.

3. Appareil de programmation selon l'une quelconque des revendications précédentes, dans lequel le processeur (201) de l'appareil de programmation est associé à un récepteur (204) configuré pour la réception sans fil (6) d'informations d'interférences (303) en provenance d'un terminal de radiocommunications (101-105), et dans lequel le processeur est configuré pour :
l'obtention des informations d'interférences à partir du récepteur (204) ;
la détermination (7), sur la base des informations d'interférences, que les ressources de fréquence et/ou de temps allouées (4) doivent être changées ;
le changement (8) de l'allocation des ressources de fréquence et/ou de temps pour la communication directe entre les terminaux ;
la préparation d'un message comprenant des informations relatives à l'allocation changée des ressource de fréquences et/ou de temps ; et
la fourniture dudit message comprenant des informations relatives à l'allocation changée à l'émetteur pour une transmission sans fil (9) à destination d'au moins l'un du premier terminal (101) et du deuxième terminal (102).

4. Appareil de programmation selon la revendication 3, dans lequel la base de données (111) est configurée pour contenir des informations d'interférences (303), et dans lequel le processeur (201) est configuré pour la mise à jour (10) de la base de données (111) sur la base des informations d'interférences (303) obtenues.

5. Appareil de programmation selon l'une quelconque des revendications précédentes, dans lequel le processeur (201) est configuré pour :
l'obtention (2) d'informations (302) relatives à une position géographique occupée par un troisième terminal de communication sans fil (103) et une position géographique occupée par un quatrième terminal de communication sans fil (104) du système de communication (110) à l'intérieur de ladite zone ;
la détermination (3), sur la base des informations topographiques (301) obtenues (1) et des positions géographiques obtenues (2) des troisième et quatrième terminaux, qu'une communication sans fil directe doit être établie entre le troisième terminal de communication sans fil (103) et le quatrième terminal de communication sans fil (104) ; et
l'allocation (4) de ressources de fréquence et/ou de temps pour la communication directe entre les troisième et quatrième terminaux (103, 104).

6. Appareil de programmation selon la revendication 5, dans lequel le processeur (201) est configuré pour :
la décision si au moins un sous-ensemble des ressources de fréquence et/ou de temps allouées (4) pour la communication directe entre les premier et deuxième terminaux (101, 102) doit être alloué (4) également pour la communication directe entre les troisième et quatrième terminaux (103, 104), sur la base des informations topographiques (301) obtenues (1) et des positions géographiques obtenues (2) des premier, deuxième, troisième et quatrième terminaux de communication (101-104).

7. Appareil de programmation selon l'une quelconque des revendications précédentes, dans lequel les premier et deuxième terminaux (101, 102) sont reliés à une première station de base radio (106) du système de communication (110).

8. Appareil de programmation selon l'une quelconque des revendications précédentes, dans lequel l'appareil (109) est compris dans un noeud de réseau dans le système de radiocommunication cellulaire (110).

9. Appareil de programmation selon la revendication 8, dans lequel le noeud de réseau est une première station de base radio, RBS, (106) du système de communication à laquelle les premier et deuxième terminaux (101, 102) sont reliés.

10. Procédé d'un appareil de programmation (109) pour un système de radiocommunication cellulaire (110), le procédé comprenant :
l'obtention (1) d'informations topographiques (301) concernant une zone géographique couverte par le système de communication (110), à partir d'une base de données (111) comprenant les informations topographiques (301) ;
l'obtention (2) d'informations (302) relatives à une position géographique occupée par un premier terminal de communication sans fil (101) et une position géographique occupée par un deuxième terminal de communication sans fil (102) du système de communication (110) à l'intérieur de ladite zone ;
la détermination (3), sur la base des informations topographiques (301) obtenues (1) et des informations géographiques obtenues (2), si une communication sans fil directe doit être établie entre le premier terminal de communication sans fil (101) et le deuxième terminal de communication sans fil (102), dans lequel ladite détermination (3) comprend la détermination s'il existe des obstacles topographiques entre les deux terminaux et/ou aux alentours de ceux-ci ;
l'allocation (4) de ressources de fréquence et/ou de temps pour la communication directe entre les terminaux (101, 102) s'il est déterminé (3) qu'une communication sans fil directe doit être établie ; et
l'envoi (5) d'un message comprenant des informations relatives aux ressources de fréquence et/ou de temps allouées (4) à destination d'au moins l'un du premier terminal (101) et du deuxième terminal (102).

11. Procédé selon la revendication 10, comprenant
la réception (6) d'informations d'interférences (303) en provenance d'un terminal de radiocommunications (101-105) ;
la détermination (7), sur la base des informations d'interférences (303), que les ressources de fréquence et/ou de temps allouées (4) doivent être changées ;
le changement (8) de l'allocation des ressources de fréquence et/ou de temps pour la communication directe entre les terminaux ; et
l'envoi (9) d'un message comprenant des informations relatives à l'allocation changée de ressources de fréquence et/ou de temps à destination d'au moins l'un du premier terminal (101) et du deuxième terminal (102).

12. Procédé selon la revendication 11, dans lequel la base de données (111) est configurée pour contenir des informations d'interférences (303), le procédé comprenant :
la mise à jour (10) de la base de données (111) sur la base des informations d'interférences (303) reçues.

13. Procédé selon l'une quelconque des revendications 10 à 12, comprenant :
l'obtention (2) d'informations (302) relatives à une position géographique occupée par un troisième terminal de communication sans fil (103) et une position géographique occupée par un quatrième terminal de communication sans fil (104) du système de communication (110) à l'intérieur de ladite zone ;
la détermination (3), sur la base des informations topographiques (301) obtenues (1) et des positions géographiques obtenues (2) des troisième et quatrième terminaux, qu'une communication sans fil directe doit être établie entre le troisième terminal de communication sans fil (103) et le quatrième terminal de communication sans fil (104) ; et
l'allocation (4) de ressources de fréquence et/ou de temps pour la communication directe entre les troisième et quatrième terminaux.

14. Procédé selon la revendication 13, dans lequel l'allocation (4) comprend :
la décision si au moins un sous-ensemble des ressources de fréquence et/ou de temps allouées pour la communication directe entre les premier et deuxième terminaux (101, 102) doit être alloué également pour la communication directe entre les troisième et quatrième terminaux (103, 104), sur la base des informations topographiques (301) obtenues (1) et des positions géographiques obtenues (2) des premier, deuxième, troisième et quatrième terminaux de communication.

15. Produit de programme informatique (80) comprenant des composants exécutables par ordinateur (81) pour amener un appareil de programmation (109) à effectuer le procédé selon l'une quelconque des revendications 10 à 14 lorsque les composants exécutables par ordinateur sont exécutés sur un processeur (201) associé à l'appareil de programmation.
